Europäisches Patentamt

European Patent Office

Office européen des brevets

(11) Veröffentlichungsnummer: **0 079 485**
**B1**

# (12) EUROPÄISCHE PATENTSCHRIFT

(45) Veröffentlichungstag der Patentschrift:
26.02.86

(21) Anmeldenummer: 82109777.1

(22) Anmeldetag: 22.10.82

(51) Int. Cl.⁴: **B 65 G 69/18**, B 65 G 67/24

(54) **Vorrichtung zur staubfreien Entladung eines Staubgutwagens.**

(30) Priorität: 14.11.81 DE 3145378

(43) Veröffentlichungstag der Anmeldung:
25.05.83 Patentblatt 83/21

(45) Bekanntmachung des Hinweises auf die Patenterteilung:
26.02.86 Patentblatt 86/9

(84) Benannte Vertragsstaaten:
AT BE CH DE FR GB LI NL SE

(56) Entgegenhaltungen:
DE - A - 2 509 678
DE - C - 163 098
FR - A - 2 077 451
FR - A - 2 419 236
US - A - 3 224 813

(73) Patentinhaber: **Waggon Union GmbH, D-5900 Siegen
(DE)**

(72) Erfinder: **Putz, Johannes Casper, Obrechtlaan 40,
Bilthoven (NL)**
Erfinder: **Kramer, Rolf, Dipl.-Ing., Lohweg 2,
D-5900 Siegen 21 (DE)**
Erfinder: **Schneider, Felix, In der Hanfwiese 2,
D-5902 Netphen 2 (DE)**
Erfinder: **Kampmann, Gerhard, Burgstrasse 11,
D-5902 Netphen 2 (DE)**

(74) Vertreter: **Eberhard, Friedrich, Dr., Am Thyssenhaus 1,
D-4300 Essen (DE)**

**Beschreibung**

Die Erfindung betrifft eine Vorrichtung zur staubfreien Entladung eines Staubgutwagens, insbesondere eines Eisenbahn-Staubgutwagens, in eine ortsfeste Bunkeranlage, wobei unten in Längsmitte des Staubgutwagens ein oder mehrere, mittels Schieber verschließbare Ausläufe angeordnet sind und die Bunkeranlage überfahrbar und mit einer oberen, zwischen der Spur des Staubgutwagens angeordneten Beschickungsöffnung versehen ist, die während der Entladung einen kragenartig gebildeten und die Ausläufe in das Bunkerinnere verlängernden Laderahmen aufweist.

Staubförmige Güter werden üblicherweise im Straßen- und Schienentransport mittels Staubgutwagen befördert. Durch die unterschiedlichen Fließeigenschaften des Staubgutes und dessen unterschiedliche spezifischen Gewichte bedingt, müssen, auch angepaßt an den Verwendungszweck des Ladegutes, sowohl unterschiedliche Beförderungseinrichtungen als auch unterschiedliche Be- und Entladungseinrichtungen, dem entsprechenden Ladegut jeweils angepaßt, gewählt werden.

Es ist bei älteren Einrichtungen nach der DE—C—163 098 bekannt, den Staubgutwagen über eine geschlossene, d.h. abgedeckte, Bunkeranlage zu fahren und den Laderahmen, der die Ausläufe des Wagens in das Bunkerinnere verlängert, nachfolgend zu bildne. Dazu sind entlang der Beschickungsöffnung anfangs noch waagerechte Klappen angelenkt, die hochgeschwenkt werden. Den Abschluß in der Querrichtung bilden quer angelenkte Klappen an dem Staubgutwagen, die heruntergeklappt werden. Die Teile eines derartigen Laderahmens bilden keine Baueinheit, weil sie zum Teil der Bunkeranlage und zum Teil dem Staubgutwagen gehören. Aus diesem Grunde und auch wegen ihrer Verschwenkbarkeit müssen sie mit verhältnismäßig viel Spielraum ausgeführt werden, die eine gute Dichtung zwischen dem Staubwagen und dem Bunker nicht gewährleisten können.

Dieser Nachteil wird bei Verwendung eines Staubgutwagens behoben, der auf seiner Oberseite durch Einschütten des Ladegutes beladbar und auf seiner Unterseite über Trichterausläufe entladbar ist. Für die Erklärung ist nach der US—A—3 224 813 bekannt, an die Trichterausläufe von unten je einen Rahmen dicht anzusetzen, der sich in einem sackartigen Kanal in einem Bunker fortsetzt. Der Bunker dient aber nur der Unterbringung von pneumatischen Absaugungseinrichtungen, an die die Kanäle angeschlossen sind. Insofern tritt dort das Problem der Abdichtung einer großen Bunkeröffnung gegenüber dem Staubgutwagen nicht auf.

Die Aufgabe der Erfindung besteht darin, eine Vorrichtung der eingangs genannten Art zu finden, die eine wirtschaftliche, umweltbelastungsfreie und betriebssichere Schüttung von Staubgut aus einem Staubgutwagen in einen Bunker gewährleistet.

Diese Aufgabe wird gemäß der Erfindung dadurch gelöst, daß die Ausläufe des Staubgutwagens Trichterausläufe sind, die von einer einzigen, nach unten mit einer ebenen Anlagefläche offenen, nach oben gegen den Staubgutwagen dicht abschließenden, glockenförmigen Schürze eingerahmt sind und daß der Laderahmen mit einer ebenen Anlagefläche von unten gegen die Schürze anlegbar, mittels einer umlaufenden Dichtung gegen die Beschickungsöffnung staubdicht schließbar ausgebildet und innen mit selbsttätig schließenden und durch das Gewicht des Ladegutes sich öffnenden Abdichtungen versehen ist und daß eine der Anlageflächen eine ebene, elastische Dichtung aufweist.

Durch diese Merkmale wird auf wirtschaftliche Weise der an dem Staubgutwagen erforderliche Aufwand auf ein Minimum reduziert. Die für die staubfreie Entladung des Staubgutwagens erforderlichen, beweglichen Bauelemente sind nur einmal, an der Bunkeranlage, erforderlich. Hierdurch wird neben der wirtschaftlichen Bauweise die Gefahr einer Beschädigung der Bauelemente während des Betriebes und Verkehrs der Staubgutwagen auf ein Minimum reduziert und der Kontroll- und Wartungsdienst wesentlich erleichtert. Ein weiterer Vorteil der erfindungsgemäßen Vorrichtung besteht darin, daß der manuelle Arbeitsaufwand zum staubdichten Verbinden des Staubgutwagens mit der Bunkeranlage praktisch entfällt.

Zur zwängungsfreien Führung des Laderahmens in der Bunkeröffnung ist dieser vorteilhaft über Führungsrollen geführt.

Die Hubbewegung des Laderahmens erfolgt zweckmäßigerweise durch mindestens zwei, mit einem Federspeicher versehene Arbeitszylinder. Zur dichten Anlage des Laderahmens an einen eventuell schräg stehenden Staubgutwagen sind dabei vorteilhaft die Führungsrollen mit begrenztem Spiel oder elastisch gegen den Laderahmen gelagert und die Lagerung der Arbeitszylinder an dem Laderahmen oder der Bunkeranlage mit begrenzter Verschiebbarkeit ausgebildet.

Der Verschluß der Öffnung des Laderahmens besteht aus ebenen, schräg in dem Laderahmen angeordneten Rutschenblechen aus abriebfestem Material und vertikal im Laderahmen aufgehängten Gummischürzen, die oben dicht an jeweils einem Rutschenblech oder dem Laderahmen befestigt sind und unten mittels an ihnen befestigten Gewichten dicht gegen die untere Kante des benachbarten Rutschenbleches anliegen.

Weiter sind zur Gewährleistung des staubdichten Abschließens der Schürze an dem Staubgutwagen und zur Verminderung von aufwendigen, staubdicht abzuschließenden Öffnungen in der Schürze die Betätigungseinrichtungen für die Schieber der Trichterausläufe innerhalb der Schürze angeordnet.

Einzelheiten der Erfindung sind anhand eines Ausführungsbeispiels in der Zeichnung erläutert. Es zeigen,

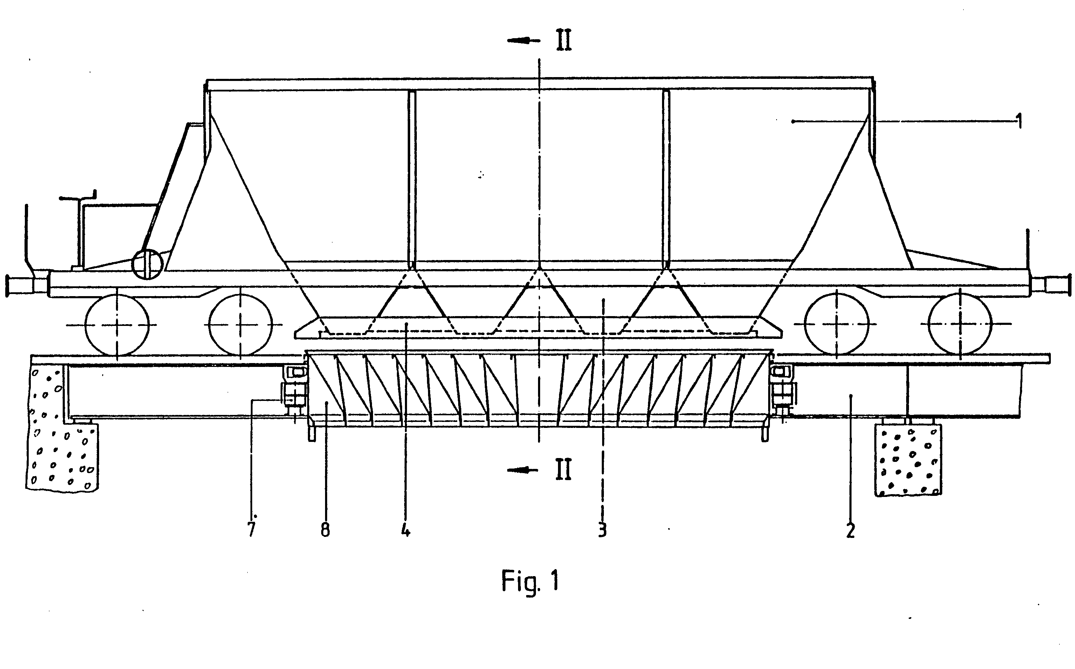

Fig. 1 die Vorrichtung gemäß der Erfindung mit schematisch dargestelltem Staubgutwagen in Seitenansicht und einem Teil der Bunkeranlage im Längsschnitt,

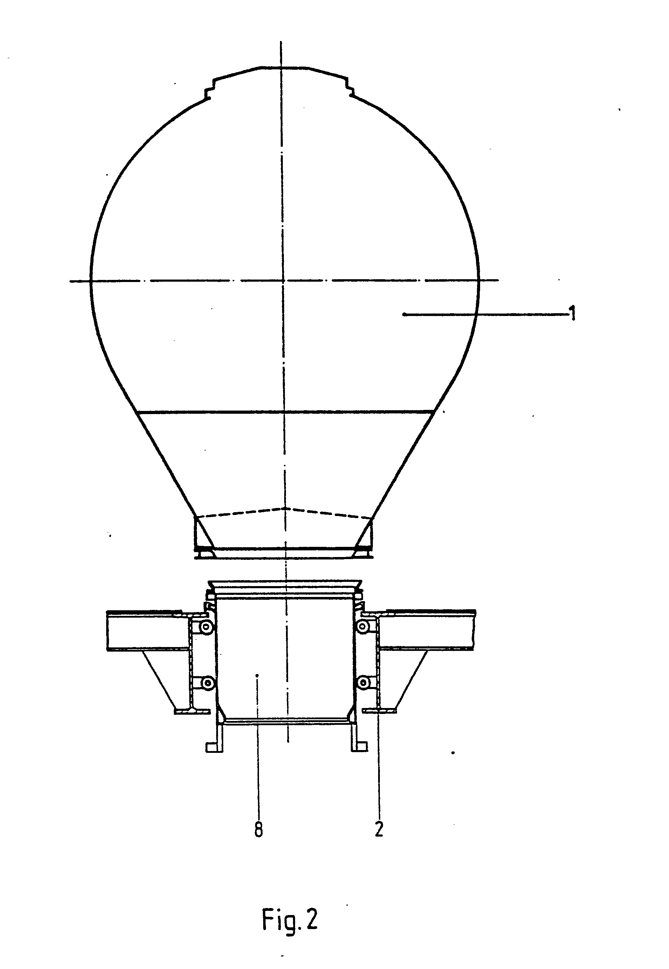

Fig. 2 die Vorrichtung nach Anspruch 1 mit schematisch dargestelltem Staubgutwagen und Bunkeranlage nach Schnitt II—II der Fig. 1,

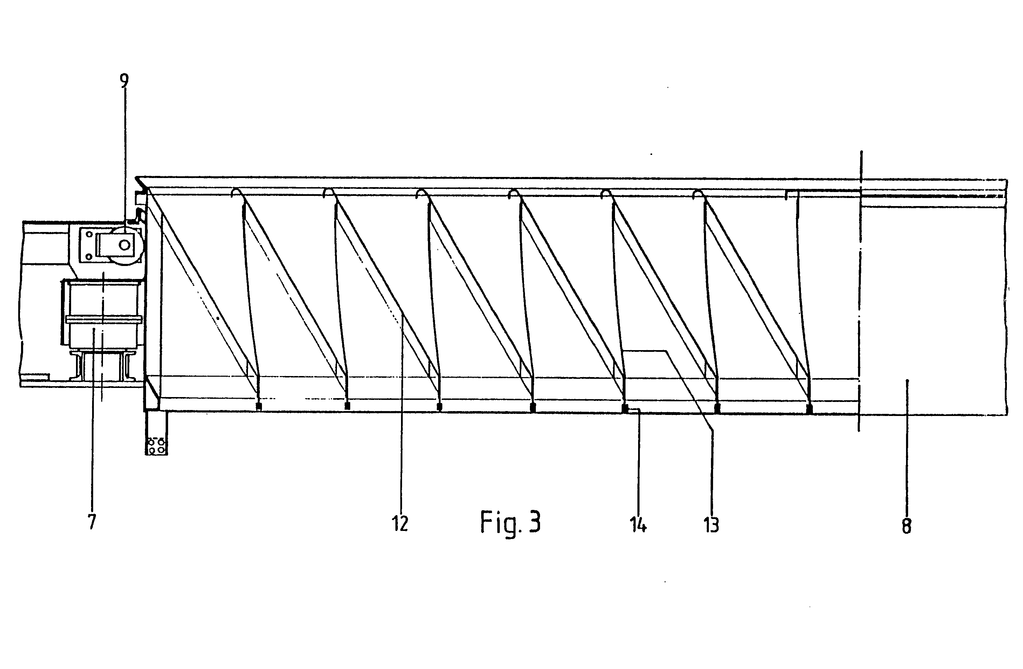

Fig. 3 einen Teillängsschnitt der Beschickungsöffnung der Bunkeranlage der Vorrichtung nach Fig. 1,

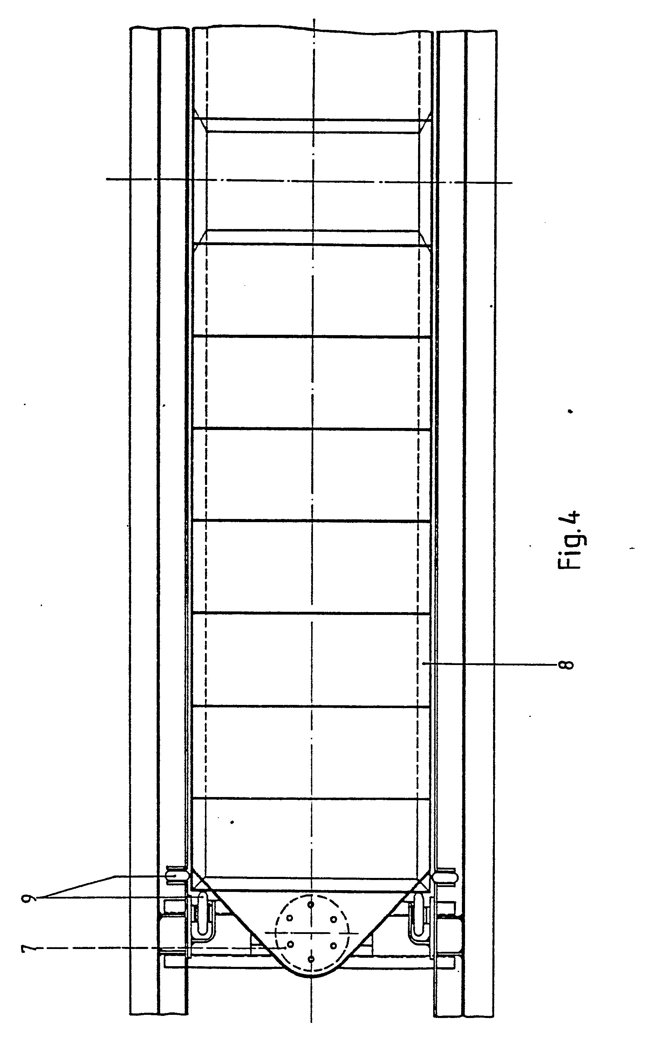

Fig. 4 Draufsicht auf die Beschickungsöffnung nach Fig. 3,

Fig. 5 einen vergrößerten Teilausschnitt der Vorrichtung nach Fig. 1 mit an der Schürze des Staubgutwagens anliegendem Laderahmen der Bunkeranlage,

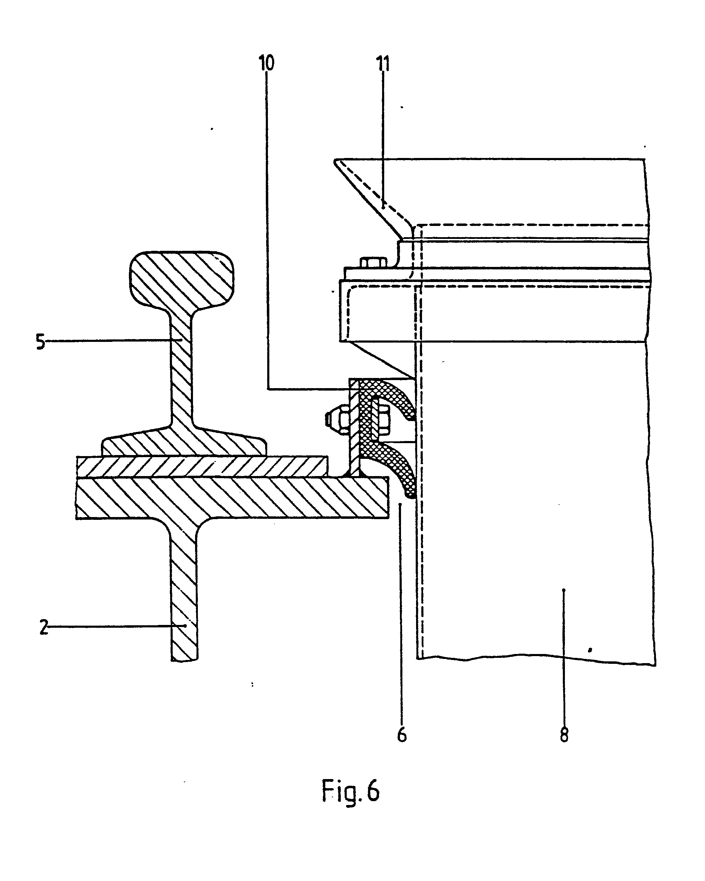

Fig. 6 einen vergrößerten Ausschnitt der Vorrichtung nach Fig. 1 mit der Abdichtung des Laderahmens gegen die Bunkeranlage.

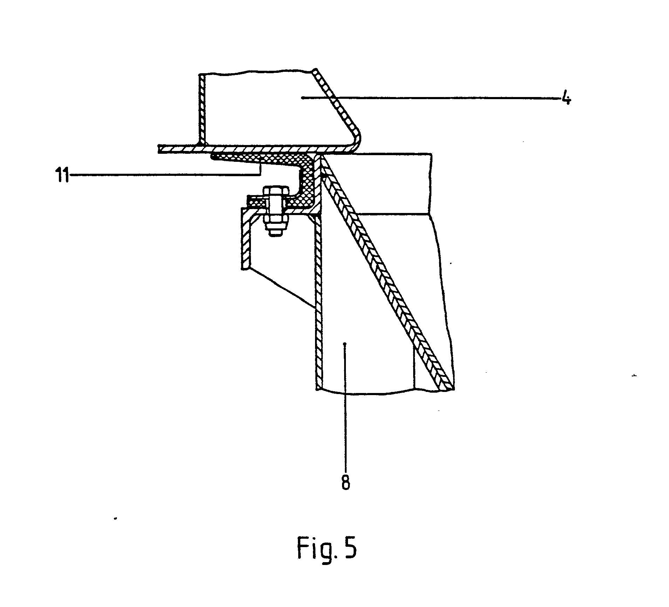

Die Vorrichtung zur staubfreien Entladung eines Staubgutwagens 1 in eine ortsfeste Bunkeranlage 2 erfordert entsprechende bauliche Maßnahmen sowohl an dem Staubgutwagen 1 als auch an der Bunkeranlage 2. Der Staubgutwagen 1 weist in seinem unteren Scheitel mehrere Trichterausläufe 3 auf, die mittels nicht dargestellter Schieber verschließbar sind. Sämtliche Trichterausläufe 3 sind von einer einzigen, nach unten offenen, nach oben gegen den Staubgutwagen 1 dicht abschließenden glockenförmigen Schürze 4 eingerahmt. Die Unterseite der Schürze 4 ist dabei, wie in Fig. 5 dargestellt, eben ausgebildet oder mit einer nicht dargestellten elastischen Dichtung versehen. Die ebenfalls nicht dargestellten Betätigungseinrichtungen für die Schieber der Trichterausläufe 3 des Staubgutwagens 1 sind zweckmäßigerweise innerhalb der Schürze 4 angeordnet, so daß lediglich die Leitungen für die Komandoübermittlung für die Betätigungseinrichtungen der Schieber durch die Schürze geführt werden müssen.

Die Bunkeranlage 4 weist auf ihrer Oberseite einen Fahrweg 5 für die Staubgutwagen auf. Zwischen der Spur des Fahrweges 5 der Bunkeranlage 2 ist eine Beschickungsöffnung 6 angeordnet. In der Beschickungsöffnung 6 lagert über pneumatische Arbeitszylinder 7, die außen an dem Laderahmen 8 an dessen Längsenden einander gegenüberliegend angeordnet sind, der Laderahmen 8. Die einendig an dem Laderahmen 8 befestigten Arbeitszylinder 7 sind mit ihrem anderen Ende an der Bunkeranlage 2 befestigt. Mindestens eine der Befestigungen der Arbeitszylinder 7 entweder an dem Laderahmen 8 oder der Bunkeranlage 2 ist dabei begrenzt verschiebbar ausgebildet. Die Führung des Laderahmens 8 in der Beschickungsöffnung 6 der Bunkeranlage 2 erfolgt über elastisch gelagerte oder mit Spiel versehene Führungsrollen 9. Gegen die Beschickungsöffnung 6 der Bunkeranlage ist der Laderahmen 8 durch eine umlaufende elastische Dichtung 10 abgedichtet. Auf seiner Oberseite ist der, im Querschnitt der Schürze 4 des Staubgutwagens 1 entsprechend ausgebildete Laderahmen 8, entweder eben ausgebildet oder mit einer umlaufenden elastischen Dichtung 11 versehen. Die ebene und flächige Unterseite der Schürze 4 nach dem dargestellten Ausführungsbeispiel oder die ebene und flächige Oberseite des Laderahmens 8 nach einem nicht dargestellten Ausführungsbeispiel, sind dabei so groß ausgebildet, daß eine ganz genaue Positionierung des Staubgutwagens 1 auf der Bunkeranlage 2 nicht erforderlich ist.

Der Laderahmen 8 ist innen verschlossen und durch das Gewicht des Ladegutes sich selbsttätig öffnend ausgebildet. Hierzu sind in dem Laderahmen 8 ebene Rutschenbleche 12 parallel zueinander verlaufend schräg angeordnet. An der Oberkante der Rutschenbleche 12 und einendig an dem Laderahmen 8 selbst sind Gummischürzen 13 dicht befestigt. An dem unteren Ende jeder Gummischürze 13 ist ein Gewicht 14 befestigt, durch das sich die Gummischürze 13 dicht gegen die untere Kante des jeweils benachbarten Rutschenbleches 12 anlegt.

Zum Entladen des Staubgutwagens 1 wird dieser über die Beschickungsöffnung 6 der Bunkeranlage 2 gefahren und positioniert. Hierauf wird der Laderahmen mittels der pneumatischen Arbeitszylinder bis zur dichten Anlage an die Unterseite der Schürze 4 des Staubgutwagens 1 angehoben. Nach dem Öffnen der Schieber der Trichterausläufe 3 des Staubgutwagens 1 fließt das Ladegut in den Laderahmen 8 der Bunkeranlage 2. Durch das Gewicht des Ladegutes werden die Gummischürzen 13 von den Rutschenblechen 12 abgehoben und das Ladegut strömt behinderungsfrei in die Bunkeranlage 2. Nach Beendigung des Entladungsvorganges legen sich die Gummischürzen 13 durch die Rückstellkraft der Gewichte 14 bedingt wieder dicht gegen die Rutschenbleche 12 des Laderahmens 8 an, so daß der Laderahmen 8 auf seiner Oberseite staubdicht verschlossen ist.

Während des Entladevorganges hebt sich der Staubgutwagen 1 durch das sich vermindernde Gewicht aus seiner Federung an. Der Laderahmen 8 bleibt auch während des Anhebens dicht unter der Schürze 4 durch den Federspeicher in seinen Arbeitszylindern 7, in dem beschriebenen Fall durch das Luftpolster in den pneumatischen Arbeitszylindern bewirkt, anliegen.

Nach Beendigung des Entladevorganges wird der Laderahmen 8 wieder in seine Ausgangsstellung abgesenkt und der Staubgutwagen von der Bunkeranlage gefahren.

**Patentansprüche**

1. Vorrichtung zur staubfreien Entladung eines Staubgutwagens (1), insbesondere eines Eisenbahn-Staubgutwagens, in eine ortsfeste Bunkeranlage (2), wobei unten in Längsmitte des Staubgutwagens (1) ein oder mehrere, mittels Schieber verschließbare Ausläufe angeordnet sind und die Bunkeranlage (2) überfahrbar und mit einer oberen, zwischen der Spur des Staubgutwagens (1) angeordneten Beschickungsöffnung (6) versehen ist, die während der Entladung einen kragenartig gebildeten und die Ausläufe in das Bunkerinnere verlängernden Laderahmen (8) aufweist, dadurch gekennzeichnet, daß Ausläufe des Staubgutwagens (1) Trichterausläufe (3) sind, die von einer einzigen, nach unten mit einer ebenen Anlagefläche offenen, nach oben gegen den Staubgutwagen (1) dicht abschließenden, glockenförmigen Schürze (4) eingerahmt sind, und daß der Laderahmen (8) mit einer ebenen Anlagefläche von unten gegen die Schürze (4) anlegbar, mittels einer umlaufenden Dichtung (10) gegen die Beschickungsöffnung (6) staubdicht verschließbar ausgebildet und innen mit selbsttätig schließenden und durch das Gewicht des Ladegutes sich öffnenden Abdichtungen (Rutschenbleche 12 und Gummischürzen 13) versehen ist und daß eine der Anlageflächen eine ebene, elastische Dichtung (11) aufweist.

2. Vorrichtung nach Anspruch 1, dadurch gekennzeichnet, daß der Laderahmen (8) in der Beschickungsöffnung (6) über Führungsrollen (9) geführt ist.

3. Vorrichtung nach Anspruch 1 oder 2, dadurch gekennzeichnet, daß der Laderahmen (8) durch mindestens zwei, mit einem Federspeicher versehene Arbeitszylinder (7) vertikal verschiebbar ist.

4. Vorrichtung nach den Ansprüchen 1 bis 3, dadurch gekennzeichnet, daß die Führungsrollen (9) mit begrenztem Spiel oder elastisch gegen den Laderahmen (8) gelagert sind und die Lagerung der Arbeitszylinder (7) an dem Laderahmen (8) oder der Bunkeranlage (2) mit begrenzter Verschwenkbarkeit ausgebildet ist.

5. Vorrichtung nach den Ansprüchen 1 bis 4, dadurch gekennzeichnet, daß der Verschluß der Öffnung des Laderähmens (8) aus ebenen, schräg in dem Laderahmen (8) angeordneten Rutschenblechen (12) und vertikal im Laderahmen aufgehängten Gummischürzen (13) besteht, die oben dich an jeweils einem Rutschenblech (12) oder den Laderahmen (8) befestigt sind und unten mittels an ihnen befestigten Gewichten (14) dicht gegen die untere Kante des benachbarten Rutschenbleches (12) anliegen.

6. Vorrichtung nach Anspruch 1, dadurch gekennzeichnet, daß die Betätigungseinrichtungen für die Schieber der Trichterausläufe (3) innerhalb der Schürze (4) angeordnet sind.

**Revendications**

1. Dispositif pour le déchargement sans poussière d'un véhicule de transport de produits pulvérulents (1), en particulier d'un wagon à produits pulvérulents, dans une installation de trémie fixe (2), une ou plusieurs sorties obturables par vanne étant placées au-dessous dans le plan median longitudinal du véhicule (1) et l'installation de trémie (2) étant franchissable pour le véhicule et pourvue d'une ouverture supérieure d'alimentation (6) placée dans la voie du véhicule (1) et présentant pendant le déchargement un cadre de chargement (8) formant col qui prolonge les sorties à l'intérieur de la trémie, caractérisé par le fait que les sorties du véhicule de transport de produits pulvérulents (1) sont des sorties en entonnoir (3) qui sont encadrées par un tablier unique (4) en forme de cloche ouvert en bas avec une surface d'appui plane et appliqué en haut de manière étanche contre le véhicule (1), que le cadre de chargement (8) est applicable d'en bas par une surface d'appui plane contre le tablier (4), est obturable de manière étanche à la poussière contre l'ouverture d'alimentation (6) par un joint (10) faisant le tour et est pourvu à l'intérieur de dispositifs d'étanchéité (tôles de glissement 12 et tabliers en caoutchouc 13) se fermant automatiquement et s'ouvrant par le poids du produit chargé, et qu'une des surfaces d'appui présente un joint d'étanchéité élastique plan (11).

2. Dispositif selon la revendication 1, caractérisé par le fait que le cadre de chargement (8) est guidé dans l'ouverture d'alimentation (6) par des galets de guidage (9).

3. Dispositif selon l'une des revendications 1 et 2, caractérisé par le fait que le cadre de chargement (8) est déplaçable verticalement par au moins deux vérins (7) pourvus d'un accumulateur à réssort.

4. Dispositif selon les revendications 1 à 3, caractérisé par le fait que les galets de guidage (9) sont montés avec un jeu limité ou élastiquement contre le cadre de chargement (8), et les vérins (7) sont montés sur le cadre de chargement (8) ou sur l'installation de trémie (2) avec une possibilité de rotation limitée.

5. Dispositif selon les revendications 1 à 4, caractérisé par le fait que la fermeture de l'orifice du cadre de chargement (8) est constituée de tôles de glissement planes (12) placées obliquement dans le cadre de chargement (8) et de tabliers en caoutchouc (13) suspendus verticalement dans le cadre de chargement qui sont fixés en haut de manière étanche chacun à une tôle de glissement (12) ou au cadre de chargement (8) et s'appuient en bas de manière étanche, par des masses (14) fixées à eux, contre le bord inférieur de la tôle de glissement (12) voisine.

6. Dispositif selon la revendication 1, caractérisé par·le fait que les dispositifs de commande des vannes des sorties en entonnoir (3) sont placés à l'intérieur du tablier (4).

**Claims**

1. Apparatus for the dust-free unloading of a vehicle (1) carrying material in powder form, especially a railway wagon carrying such material, into a stationary bunker installation (2), one or more outlets closable by means of slides being arranged underneath centrally along the length of the powder-material wagon (1), and the bunker installation (2) being adapted to have the wagon run over it and being provided with a top feed aperture (6) which is situated between the rail gauge of the powder-material wagon (1) and which during unloading comprises a collar-form loading frame (8) prolonging the outlets into the interior of the bunker, characterised in that the outlets of the powder-material wagon (1) are hopper outlets (3) framed by a single bell-shaped apron (4) which is open downwardly with a flat abutment surface and upwardly closes in sealing-tight manner against the powder-material wagon (1), and that the loading frame (8) is adapted to be applied with a flat abutment surface from below against the apron (4) is made to be closable in dust-tight manner against the feed aperture (6) by means of an encircling sealing element (10), and is provided internally with automatically closing sealing elements which open through the weight of the load material (chute plates 12 and rubber aprons 13), and that one of the abutment surfaces comprises a flat elastic sealing element (11).

2. Apparatus according to claim 1, characterised in that the loading frame (8) is guided by means of guide wheels (9) in the feed aperture (6).

3. Apparatus according to claim 1 or 2, characterised in that the loading frame (8) is adapted to be displaced vertically by at least two working cylinders (7) which are provided with spring force storage means.

4. Apparatus according to claims 1 to 3, characterised in that the guide wheels (9) are supported with limited play or elastically against the loading frame (8) and the bearing means of the working cylinders (7) on the loading frame (8) or on the bunker installation (2) are given limited pivotability.

5. Apparatus according to claims 1 to 4, characterised in that the closure of the aperture of the loading frame (8) consists of flat chute plates (12) situated in an inclined manner in the loading frame (8) and of rubber aprons (13) which are suspended vertically in the loading frame and which are secured at the top in sealing-tight manner each on a chute plate (12) or on the loading frame (8) and underneath abut by means of weights (14) secured to them in sealing-tight manner against the lower edge of the neighbouring chute plate (12).

6. Apparatus according to claim 1, characterised in that the actuating devices for the slides of the hopper outlets (3) are arranged within the apron (4).

Fig. 1

1

8          2

Fig. 2

9

7                                                                    0 079 485

5

12            Fig. 3            14      13                    8

Fig.4

0 079 485

Fig. 5

Fig.6